# EUROPÄISCHE PATENTSCHRIFT

(11) **EP 1 243 303 B1**
(45) Veröffentlichungstag und Bekanntmachung des Hinweises auf die Patenterteilung: **20.10.2004**
(21) Anmeldenummer: 01106845.9
(22) Anmeldetag: 19.03.2001
(51) Int. Cl.: B01D 29/92, B01D 29/48

(54) **Filterkerze**
Filter candle
Bougie filtrante

(43) Veröffentlichungstag der Anmeldung: 25.09.2002
(73) Patentinhaber: Anton Steinecker Maschinenfabrik GmbH, 85356 Freising-Attaching (DE)
(72) Erfinder: Hahn, Adolf, 92726 Waidhaus (DE); Banke, Friedrich, 84416 Inning am Holz (DE); Flossmann, Rudolf, 85416 Langenbach (DE); Gratzer, Harald, 85459 Berglern (DE)
(74) Vertreter: Grünecker, Kinkeldey, Stockmair & Schwanhäusser Anwaltssozietät

(56) Entgegenhaltungen:
- EP-A- 0 209 348
- DE-A- 1 552 413
- DE-C- 20 122
- US-A- 3 387 712
- US-A- 3 750 889

## Beschreibung

Die Erfindung betrifft einen Biefilter nach Anspruch 1.

Derartige Filterkerzen werden insbesondere bei der Bierherstellung verwendet, um die im Bier enthaltenen Trübstoffe herauszufiltern. Bei den sogenannten Anschwemmfiltern wird dem Bier unter anderem ein Filterhilfsmittel, wie z. B. Kieselgur zugesetzt, das sich dann an der Außenseite des Filterkörpers anlagert, um dort eine Anschwemmschicht auszubilden. Das zu filternde Bier, das sich im Unfiltratraum eines Filterbehälter befindet, gelangt dann durch die Anschwemmschicht und die Fluiddurchlässe ins Innere der rohrförmigen Filterkerzen und wird weiter zu einem Filtratraum oberhalb des Unfiltratraums geleitet. Der Unfiltratraum ist durch eine horizontale Trennwand von dem Filtratraum des Filterbehälters getrennt, wobei die Filterkerzen hängend an der horizontalen Trennwand angeordnet sind.

Herkömmlichen Filterkerzen bestehen z.B aus gewickeltem Profildraht, wobei die Spalte zwischen den Drahtwindungen als Fluiddurchlässe dienen.

Vor dem eigentlichen Beginn der Filtration muss das einlaufende Bier die im Filterbehälter vorliegende Flüssigkeit ( von der Voranschwemmung ) verdrängen, andererseits muss nach Beendigung eines Filtervorganges das im Filterbehälter vorhandene Bier mit Wasser verdrängt werden. In beiden Fällen vermischt sich dabei Wasser mit Bier und bildet eine Verschnittmenge, die nicht unmittelbar als Produkt verwertbar ist. Je größer das Volumen des Filterinnenraumes ist, desto größer ist auch die nur durch zusätzlichen Aufwand, wie z.B Verschneiden mit dem eigentlichen Produkt, unerwünschte Verschnittmenge. Die bekannten Filterkerzen tragen in nicht unwesentlichem Maße mit ihrem Innenraumvolumen zum gesamten Flüssigkeitsaufnahmevolumen und damit zu möglichen Verschnittmengen bei.

Die Patentschrift FR-665.429 weist einen Filter auf mit einem Zulauf, einem Filterkörper mit einem Kern aus Metall, der mehrere Trennwände aufweist, um die ein Metalldraht gewickelt ist. Weiter weist diese Druckschrift ein Gehäuse auf mit einem Ablauf für das Filtrat auf. Es handelt sich dabei um keine Filterkerze für die Anwendung in Bierfiltem, da nur ein Filterkörper vorgesehen ist und das Unfiltrat zunächst ins Innere des Filterkörpers fließt und dann nach außen tritt.

Der Erfindung liegt daher die Aufgabe zugrunde, eine Filterkerze bereitzustellen, die eine reduzierte Verschnittmenge und gleichzeitig eine verbesserte Stabilität mit sich bringt

Erfindungsgemäß wird die vorliegenden Aufgabe durch die Merkmale des Anspruchs 1 gelöst.

Durch den Innenkörper mit geschlossenem Aussenmantel im Innenraum des Filterkörpers verringert sich das Filtratraumvolumen auf einen Bruchteil, so dass Verschnittmengen von unterschiedlichen Medien für verschiedene Prozessschritte deutlich reduziert werden. Durch die Volumenreduzierung im Filterkörper ergeben sich darüber hinaus deutlich höhere Fließgeschwindigkeiten der durchgeleiteten Fluidströme, was insbesondere bei der Reinigung der Filterkerzen eine sehr hohe Effizienz und somit eine Wassereinsparung mit sich bringt, aber auch bei der Voranschwemmung und Filtration von Vorteil ist. Wegen der erhöhten Fliessgeschwindigkeiten werden unerwünschte Sedimentationen von Filterhilfsmittel im Inneren insbesondere im unteren Ende der Kerzen vermieden. Solche Sedimentationen könnten ansonsten durch die bei der Voranschwemmung bis zur Ausbildung einer stabilen Kerzenstruktur durch die Spalte hindurchgelangenden kleinen Partikel entstehen. Bei der Reinigung schliesslich ergeben sich wegen höherer Rückspülgeschwindigkeiten eine höhere Wirksamkeit.

Die erfindungsgemäße Anordnung eines Innenkörpers im Filterkörper bringt darüber hinaus eine erhöhte Stabilität der meist über 1 m langen Filterkerzen mit sich.

Gemäß der vorliegenden Erfindung ist der Filterkörper im Wesentlichen hohlzylindrisch aus einem spiralförmig gewundenem Draht gebildet, wobei die Spalte zwischen den Drahtwindungen als Fluiddurchlässe dienen. Der Innenkörper kann zylinderförmig oder hohlzylinderförmig ausgebildet sein und erstreckt sich entlang der Längsachse des Filterkörpers. Zylinder- oder hohlzylinderförmige Innenkörper lassen sich einfach fertigen.

Es ist vorteilhaft, wenn der Innenkörper über Abstandshalter mit dem Fluidkörper verbunden ist. Dann kann der Innenkörper gleichzeitig als Träger für den Filterkörper, d.h. z. B. für die spiralförmig gewickelten Drähte dienen und verleiht dem Innenkörper zusätzliche Stabilität, was wiederum größere Baulängen ermöglicht.

Gemäß der vorliegenden Erfindung kann der Filterkörper direkt auf den Innenkörper aufgewickelt sein. Der Innenkörper kann hierzu Vorsprünge aufweisen, die mit dem Filterkörper dann in Verbindung gebracht werden. Der Filterkörper, z. B. die Drahtwindungen, können dann mit den Vorsprüngen des Innenkörpers verschweißt werden.
Das Ausbilden von Vorsprüngen ist im Vergleich zur Verwendung von Abstandshaltem einfacher, da diese nicht extra an den Innenkörper geschweißt werden müssen.

Die Vorsprünge ergeben sich in vorteilhafter Weise aus einem Innenkörper mit einem sternförmigen Querschnitt. Durch die sternförmige Ausbildung des Innenkörpers ergeben sich mehrere äußere Längskanten mit denen der Filterkörper verschweißt werden kann. Dabei kann z. B. der Draht spiralförmig um die äußeren Längskanten des Innenkörpers gewickelt und damit verschweißt werden.

Gemäß einer besonderen Ausführungsform erstrecken sich die Abstandshalter stabförmig entlang der Längsachse des Filterkörpers zwischen Filterkörper und Innenkörper. Filterkörper, Abstandshalter und Innenkörper können so auf sehr stabile Weise z. B. durch Verschweißen miteinander verbunden werden.

In vorteilhafter Weise ist der Innenkörper rohrförmig ausgebildet. Dies bringt den Vorteil mit sich, dass das Gesamtgewicht der Filterkerzen sehr gering gehalten werden kann. Der Innenkörper kann auch massiv ausgebildet sein, was zusätzliche Stabilität mit sich bringt, andererseits aber das Gewicht erhöht.

Die Filterkerze kann weiter ein Kopf- und ein Endstück umfassen, die die Filterkerze verschließen, wobei das Volumenelement auch mit Kopf- und Endstück in Verbindung steht. Wenn das Volumenelement zusätzlich mit Kopf- und Endstück in Verbindung steht, kann die Stabilität weiter erhöht werden. Darüber hinaus kann beispielsweise bei der Verwendung eines rohrförmigen Innenkörpers ein offenes Rohr verwendet werden, dessen Ober- und Unterseite erst durch das Kopf- und Endstück verschlossen wird.

Das verdrängte Volumen des Innenkörpers beträgt zwischen 10 und 70% des Innenvolumens des Filterkörpers. Da in einem Anschwemmfilter, wie er üblicherweise für die Bierfiltration verwendet wird, eine Vielzahl von Filterkerzen eingesetzt werden ( bis zu 80 Kerzen) ergibt sich selbst bei einer Volumenreduzierung von nur zehn % bereits eine ins Gewicht fallende Verschnittmengenreduktion.

Die Erfindung wird anhand der folgenden Figuren näher erläutert. Dabei zeigt:
- Fig. 1: einen schematischen Längsschnitt durch eine erfindungsgemäße Filterkerze.
- Fig. 1a: einen Schnitt entlang der Linie A-A der Fig. 1.
- Fig. 2: einen Längsschnitt durch ein weiteres Ausführungsbeispiel einer erfindungsgemäßen Filterkerze;
- Fig. 2a: einen Schnitt entlang der Linie A-A in Fig. 2:
- Fig. 3: einen Längsschnitt durch eine erfindungsgemäße Filterkerze;
- Fig. 3a: den Querschnitt des in Fig. 3 verwendeten Innenkörpers und
- Fig. 4: einen schematischen Schnitt durch einen Filterbehälter, in dem die erfindungsgemäßen Filterkerzen aufgehängt sind.

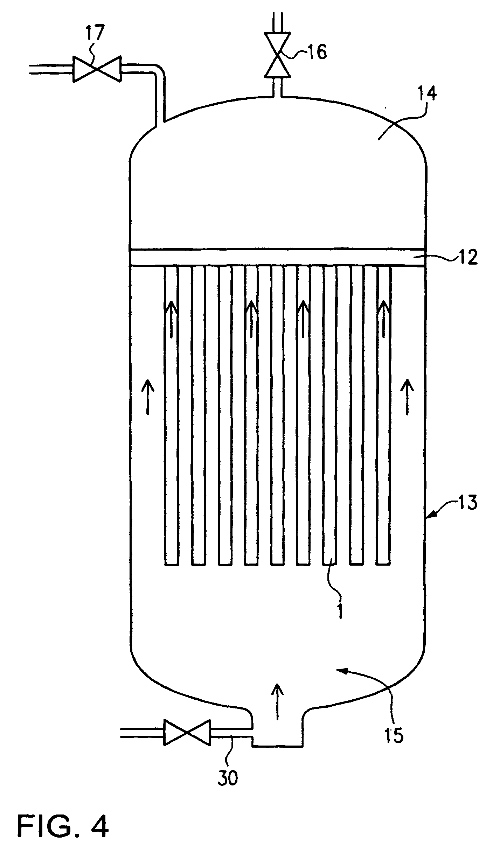

Die erfindungsgemäßen Filterkerzen können in einem nur schematisch in Fig.4 dargestellten Anschwemmfilter verwendet werden. Der Anschwemmfilter umfasst einen Filterbehälter 13, der über eine Trennwand 12 in einen Unfiltratraum 15 und einen Filtratraum 14 unterteilt ist. An der Trennwand 12 sind die Filterkerzen aufgehängt und befestigt und ragen in den Unfiltratraum hinein. Über eine Zuleitung 30 gelangt Unfiltrat, z. B. Bier, das mit einem Filterhilfsmittel, wie z. B. Kieselgur, versetzt wurde, in den Unfiltratraum 15. An den Außenflächen der im Wesentlichen zylindrischen Filterkerzen bildet sich eine sogenannte Anschwemmschicht aus. Das Unfiltrat gelangt durch die Anschwemmschicht durch die Fluiddurchlässe des Filterkörpers in das Innere des Filterkörpers und wird in den Filtratraum 14 weitergeleitet. Über den Ablauf 16 kann das Filtrat aus dem Filterbehälter entnommen werden. Weiter können Spülleitungen 40 zur Reinigung des Kessels 13 vorgesehen sein.

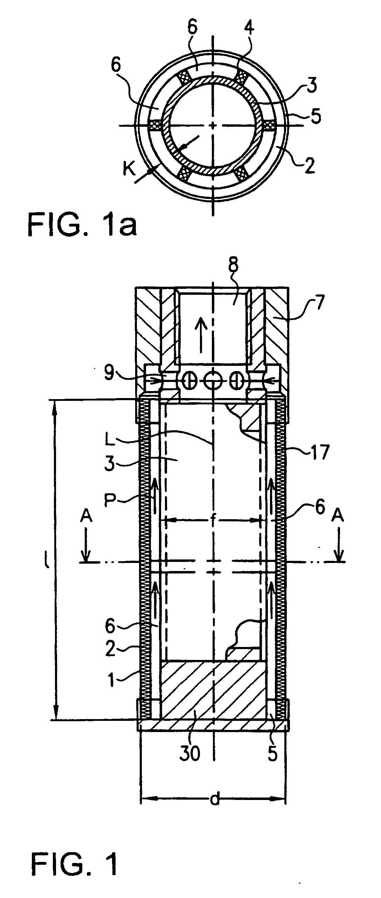

Fig. 1 zeigt schematisch einen Längsschnitt durch ein erstes Ausführungsbeispiel der Erfindung. Bei diesem Ausführungsbeispiel dient ein spiralförmig gewundener Draht als Filterkörper 2. Der Draht 17 kann z. B. im Querschnitt im Wesentlichen dreieckförmig ausgebildet sein, wobei die Grundlinie des Dreiecks auf der Außenseite der Kerzenfilterwand liegt und in Kerzenlängsrichtung verläuft, und sich zwischen jeweils zwei benachbarten Windungen des Drahtes in an sich bekannter Weise und daher nicht näher dargestellt ein sich nach dem Kerzeninneren zu erweiternder Spalt mit einer Spaltbreite von ca.30 -100 µm an der Außenseite der Kerzenfilterwand bildet. Der Spalt zwischen den Drahtwindungen dient als Fluiddurchlaß.

Der Draht 17 ist, wie aus den Figuren 1 und 1a hervorgeht, über Abstandshalter 4 um einen hohlzylindrischen Innenkörper 3 gewunden, wobei der Innenkörper 3 und der Draht 17 über die Abstandshalter 4 miteinander verbunden, z.B an mehreren Stellen miteinander verschweißt sind. Somit dient der Innenkörper 3 gleichzeitig als Träger für den gewundenen Draht 17 und verleiht diesem somit eine hohe Stabilität. Die Abstandshalter 4 sind in diesem Ausführungsbeispiel als Stäbe ausgebildet, die sich entlang der Längsachse L der Filterkerze 1 erstrecken. Sowohl die Abstandshalter 4 als auch der Innenkörper 3 erstrecken sich über die gesamte Länge entlang der Längsachse L des Filterkörpers 2, d. h. hier des gewundenen Drahtes 2. Durch den Innenkörper 3 und die Abstandshalter 4 ergeben sich im Filterkörper mehrere Filtratkanäle 6. Bei diesem Ausführungsbeispiel wurden sechs Abstandshalter 4 verwendet, so dass sich insgesamt auch sechs Filtratkanäle 6 ergeben. Durch den Innenkörper 3 kann das Innenvolumen im Filterkörper 2 erheblich reduziert werden. Der Innenkörper weist einen geschlossenen Außenmantel auf, d. h., dass kein Filtrat ins Innere des Innenkörpers eindringen kann. In diesem Ausführungsbeispiel ist der Innenkörper 3 aus Gewichtgründen innen hohl, d.h. rohrförmig und umfasst ein massives Endstück 30 mit einer umlaufenden Nut 5 zur Aufnahme und Abstützung der Drahtwicklung 17 . Der Innenkörper 3 könnte jedoch auch massiv ausgebildet sein. Der Innenkörper 3 kann je nach Radius zwischen 10 bis 70% des Innenvolumens im Filterkörper 2 einnehmen.

Durch das Endstück 30 und das Kopfstück 7 wird der Innenraum des Innenkörpers vollständig verschlossen. Denkbar wäre es aber auch, den Innenkörper 3 nicht durch das Kopfstück 7 zu verschliessen, sondern bereits vorab durch geeignete Deckel oder Kappen. Wesentlich ist nur, dass kein Filtrat in den Innenkörper laufen kann, so dass das fluidbeaufschlagte Innenvolumen des Filterkörpers 2 reduziert wird.

Im Betrieb kann Unfiltrat durch die Spalte 11 zwischen den Drahtwicklungen 17 des Filterkörpers 2 in die Filtratkanäle 6 der Filterkerze 1 laufen, entlang der Pfeile P nach oben steigen und durch Aussparungen 9, die im Kopfstück 7 für jeden Filtratkanal 6 ausgebildet sind, zu einem Filtratauslassbereich 8 des Kopfstücks 7 gelangen. Das Kopfstück 7 ist z. B. mit der Filterplatte 12 verbunden, so dass das Filtrat dann in den in Fig. 4 gezeigten Filtratraum 14 kommt.

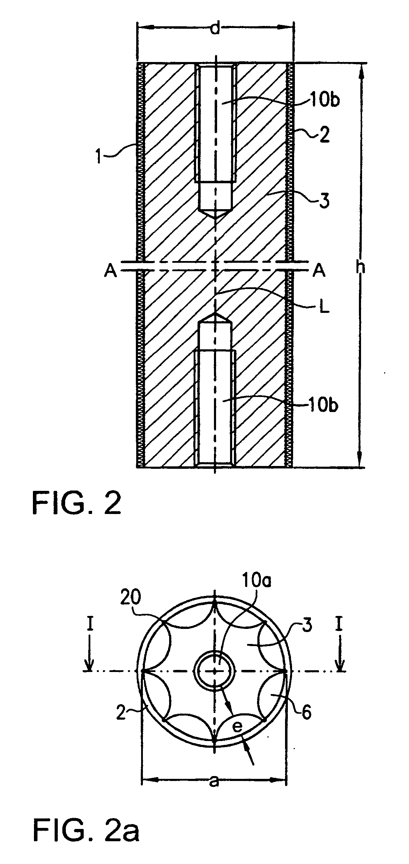

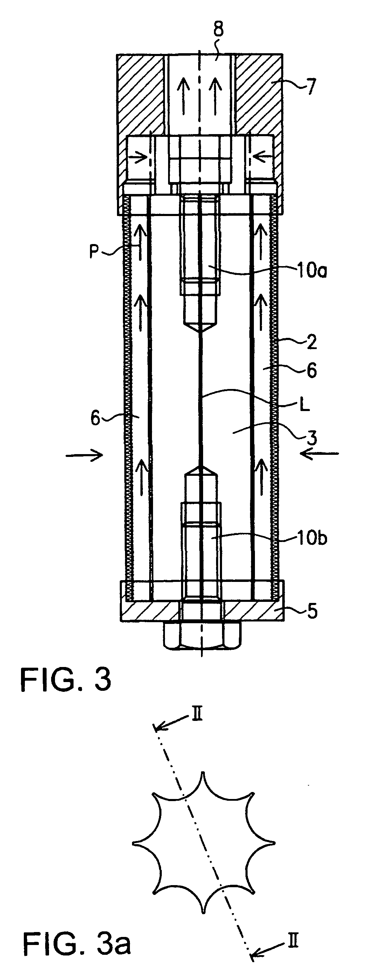

Die Figuren 2, 2a und 3, 3a, zeigen ein weiteres Ausführungsbeispiel der vorliegenden Erfindung. Ebenso wie bei dem in den Figuren 1, 1a dargestellten Ausführungsbeispiel ist auch hier zur Reduktion des Innenvolumens des Filterkörpers 2 ein Innenkörper 3 im Filterkörper 2 angeordnet. Hier ist der Innenkörper 3 jedoch nicht zylindrisch bzw. hohlzylindrisch ausgebildet, sondern weist einen sternförmigen Querschnitt, wie deutlich aus Figuren 2a und 3a hervorgeht, auf. Auch bei diesem Ausführungsbeispiel ist der Filterkörper 2 aus einem spiralförmig gewundenen Draht 17, in gleicher Weise wie im Zusammenhang mit Figuren 1 und 2 beschrieben, gebildet. Der sternförmige Querschnitt des Innenkörpers 3 weist im Beispiel acht Vorsprünge 20 auf. Da sich der Innenkörper auch hier entlang der Längsachse L des Filterkörpers 2 erstreckt, ergeben sich jeweils an den Vorsprüngen 20 acht Kanten, die sich in Längsrichtung L des Filterkörpers 2 erstrecken. Diese Kanten dienen als Anlagepunkte für den Draht, der somit nicht über separate Träger am Innenkörper abgestützt wird'. Der Draht 17 wird vielmehr spiralförmig um die Kanten 20 des Innenkörpers 3 gewunden und mit den Kanten verschweißt. Somit dient der Innenkörper als Träger für den Filterkörper 2, d. h. für den gewundenen Draht 17 und sorgt für einen äußerst stabilen Aufbau. Der sternförmige Querschnitt muss mindestens drei Vorsprünge 20 aufweisen, damit er sich zum Umwickeln mit dem Draht 17 eignet. Durch den an den Innenkörper 3 geschweißten Filterkörper 2 ergeben sich auch hier acht Filtratkanäle 6, durch die das Filtrat zum Filtratraum geleitet wird. Da die Fig. 2 ein Längsschnitt entlang der Linie I-I in Fig. 2a ist, sind die Filtratkanäle 6 in Fig. 2 nicht zu sehen. In Fig. 2 sind ausserdem Sackbohrungen 10b angedeutet, über die der Innenkörper 3, beispielsweise mit dem Endstück 5 und dem Kopfstück 7 unter Verwendung von in Fig. 3 eingezeichneten Schrauben verschraubt werden kann.

Fig. 3 und 3a, die das gleiche Ausführungsbeispiel wie die Fig. 2 zeigen, zeigt zusätzlich Kopf- und Endstück 5, 7. Anders als bei Fig. 2 ist die Fig. 3 entlang einer Linie II-II der Fig. 3a geschnitten, so dass die Filtratkanäle 6 sichtbar sind. Wie die Fig. 3 zeigt, weisen Kopf- und Endstück 5, 7 wieder jeweilige Aussparungen zur Aufnahme des Filterkörpers und des Innenkörpers 3 auf. Bei diesem Ausführungsbeispiel sind Kopf- und Endstück 5, 7 mit dem Innenkörper 3 verschraubt. Die Verbindung von Filterkörper und Innenkörper mit Kopf- und Endstück 5, 7 könnte jedoch ebenso wie in Fig 1 gezeigt erfolgen. Der Innenkörper 3 mit sternförmigem Querschnitt kann entweder hohl, d. h. rohrförmig ausgebildet sein, oder aber massiv. Ebenso wie bei dem ersten Ausführungsbeispiel erläutert, passiert das Unfiltrat zunächst durch die Anschwemmschicht (nicht dargestellt), die Spalten 11 zwischen den Drähten 17. Das Filtrat steigt dann in den Filtratkanälen 6 entlang der Pfeile P nach oben zum Filtratauslaß 8 im Kopfstück 7.

## Patentansprüche

1. Bierfilter, der einen Filterkessel (13) mit einem Unfiltratraum (15) umfasst, wobei im Unfiltratraum (15) zur Filtrierung von Fluiden mehrere rohrförmige Filterkerzen (1) angeordnet sind, deren rohrförmige Filterkörper (2) im Wesentlichen hohlzylindrisch aus einem spiralförmig gewickelten Draht (17) gebildet sind, wobei Spalte (11) zwischen den Drahtwindungen als Fluiddurchlässe (11) dienen,
im Innenraum des Filterkörpers (2) ein Innenkörper (3) mit geschlossenem Außenmantel zur Volumenreduktion des Innenraums des Filterkörpers angeordnet ist,
der Innenkörper (3) entweder über Abstandshalter (4) mit dem gewickelten Draht verbunden ist oder der Draht unmittelbar auf den Innenkörper (3) aufgewickelt ist,
Unfiltrat aus dem Unfiltratraum durch die Spalte (11) ins Innere des Filterkörpers geleitet wird, und
das Volumen des Innenkörpers zwischen 10% und 70% des Innenvolumens des Filterkörpers ausfüllt.

2. Bierfilter nach Anspruch 1 , **dadurch gekennzeichnet, dass** der Innenkörper zylinderförmig oder hohlzylinderförmig ist und sich entlang der Längsachse (L) des Filterkörpers (2) erstreckt.

3. Bierfilter nach Anspruch 1, **dadurch gekennzeichnet, dass** der Innenkörper (3) einen sternförmigen Querschnitt aufweist.

4. Bierfilter nach Anspruch 1, **dadurch gekennzeichnet, dass** der Draht spiralförmig um die äußeren Längskanten des Innenkörpers (3) gewickelt und mit diesem verschweißt ist.

5. Bierfilter nach mindestens einem der vorhergehenden Ansprüche, **dadurch gekennzeichnet, dass** die Filterkerze (1) weiter ein Kopf - (7) und ein Endstück (5) umfasst, die die Filterkerze verschließen, wobei der Innenkörper (3) auch mit Kopf- und Endstück (5, 7) in Verbindung steht.

6. Bierfilter nach mindestens einem der vorhergehenden Ansprüche, **dadurch gekennzeichnet, dass** der Innenkörper (3) rohrförmig ausgebildet ist.

7. Bierfilter nach mindestens einem der vorhergehenden Ansprüche, **dadurch gekennzeichnet, dass** der Innenkörper (3) massiv ausgebildet ist.

## Claims

1. A beer filter comprising a filter vessel (13) with a non-filtrate chamber (15), wherein said non-filtrate chamber (15) has arranged therein a plurality of tubular filter candles (1) for filtering fluids, the tubular filter bodies (2) of said filter candles (1) being essentially hollow-cylindrical components formed of a spirally wound wire (17), wherein gaps (11) between the wire coils serve as fluid passages (11),
the interior of the filter body (2) has arranged therein an inner element (3) having a closed outer circumferential surface for reducing the volume of the interior of the filter body,
the inner element (3) is either connected to the wound wire via spacers (4) or the wire is wound directly onto the inner element (3),
non-filtrate is conducted from the non-filtrate chamber through the gaps (11) into the interior of the filter body, and
the volume of the inner element fills between 10 % and 70 % of the interior volume of the filter body.

2. A beer filter according to claim 1, **characterized in that** the inner element is cylindrical or hollow-cylindrical and extends along the longitudinal axis (L) of the filter body (2).

3. A beer filter according to claim 1, **characterized in that** the inner element (3) has a star-shaped cross-section.

4. A beer filter according to claim 1, **characterized in that** the wire is spirally wound onto the outer longitudinal edges of the inner element (3) and welded thereto.

5. A beer filter according to at least one of the preceding claims, **characterized in that** the filter candle (1) additionally comprises a head piece (7) and an end piece (5), by means of which the filter candle is closed, the inner element (3) being also connected to the head piece (7) and the end piece (5).

6. A beer filter according to at least one of the preceding claims, **characterized in that** the inner element (3) is a tubular component.

7. A beer filter according to at least one of the preceding claims, **characterized in that** the inner element (3) is a solid component.

## Revendications

1. Filtre à bière comportant une cuve filtrante (13) dotée d'un compartiment de non-filtrat (15), plusieurs bougies tubulaires filtrantes (1) étant disposées dans le compartiment de non-filtrat (15) pour le filtrage de fluides, dont les corps filtrants tubulaires (2) sont sensiblement formés en cylindres creux à partir d'un fil (17) enroulé en hélice, des fentes (11) entre les spires de fil servant de passages de fluide (11),
un corps interne (3) à enveloppe externe fermée étant disposé à l'intérieur du corps filtrant (2) pour réduire le volume du compartiment interne,
le corps interne (3) étant soit relié par des écarteurs (4) au fil enroulé, soit le fil étant enroulé directement sur le corps interne (3),
du non-filtrat étant amené hors du compartiment de non-filtrat par les fentes (11) à l'intérieur du corps filtrant, et
le volume du corps interne remplissant entre 10% et 70% du volume interne du corps filtrant.

2. Filtre à bière selon la revendication 1, **caractérisé en ce que** le corps interne est en forme de cylindre ou en forme de cylindre creux et s'étend le long de l'axe longitudinal (L) du corps filtrant.

3. Filtre à bière selon la revendication 1, **caractérisé en ce que** le corps interne (3) présente une section transversale en forme d'étoile.

4. Filtre à bière selon la revendication 1, **caractérisé en ce que** le fil est enroulé en forme d'hélice autour des arêtes longitudinales externes du corps internes (3) et soudé à ce dernier.

5. Filtre à bière selon l'une au moins des revendications précédentes, **caractérisé en ce que** la bougie filtrante (1) comprend de plus une pièce de tête (7) et une pièce d'extrémité (5) fermant la bougie filtrante, le corps interne (3) étant également relié à la pièce de tête et à la pièce d'extrémité (5, 7).

6. Filtre à bière selon l'une au moins des revendications précédentes, **caractérisé en ce que** le corps interne (3) est réalisé en forme de tube.

7. Filtre à bière selon l'une au moins des revendications précédentes, **caractérisé en ce que** le corps interne (3) est réalisé sous forme massive.
